## Europäisches Patentamt

## European Patent Office

## Office européen des brevets

(19)

(11) Publication number: **0 145 993**
**B1**

(12)

# EUROPEAN PATENT SPECIFICATION

(45) Date of publication of patent specification: **19.04.89**

(51) Int. Cl.⁴: **F 02 D 41/40, F 02 D 41/26**

(21) Application number: **84114028.8**

(22) Date of filing: **20.11.84**

(54) **Fuel control apparatus for diesel engine.**

(30) Priority: **21.11.83 JP 219174/83**

(43) Date of publication of application:
**26.06.85 Bulletin 85/26**

(45) Publication of the grant of the patent:
**19.04.89 Bulletin 89/16**

(84) Designated Contracting States:
**DE FR GB**

(56) References cited:
**EP-A-0 056 165**
**EP-A-0 063 375**
**FR-A-2 083 850**
**FR-A-2 206 443**
**GB-A-2 069 723**

(73) Proprietor: **HITACHI, LTD.**
**6, Kanda Surugadai 4-chome Chiyoda-ku Tokyo (JP)**

(73) Proprietor: **Hitachi Automotive Engineering Co., Ltd.**
**3085-5, Higashiishikawa-Saikouji Katsuta-shi Ibaraki 312 (JP)**

(72) Inventor: **Sano, Yukinori**
**Dainiyuwaryo 23-1 Ishikawacho Katsuta-shi (JP)**
Inventor: **Hoshi, Yoshikazu**
**2650-62, Muramatsu Tokaimura Naka-gun Ibaraki-ken (JP)**

(74) Representative: **Patentanwälte Beetz sen. - Beetz jun. Timpe - Siegfried - Schmitt-Fumian Steinsdorfstrasse 10 D-8000 München 22 (DE)**

## Description

The present invention relates to a fuel control apparatus for diesel engines according to the precharacterizing part of claim 1.

Such a fuel control apparatus for diesel engines is known from EP—A—0 063 375.

As well known, in a diesel engine, no ignition plug is used but ignition and explosion are performed by the heat due to compressed fuel to thereby drive a piston. The ignition timing is determined by the timing when fuel is injected into a cylinder. Even in such a diesel engine in which no ignition plug is used, it is necessary to suitably adjust the ignition timing in accordance with the revolution speed of the engine similarly to the case of gasoline engines. The adjustment of ignition timing is attained by advancing the fuel injection timing. Conventionally, however, there was no control apparatus in which the quantity and timing of fuel injection in such a diesel engine were performed by using an electromagnetic valve.

However, it has become necessary to set the optimum timing for an electromagnetic valve in order to realize stable supply of fuel to a fuel pump having large capacity and stable and wide control in fuel injection timing. This is because the fuel is supplied into a rotary body in the direction perpendicular to the rotary axis thereof through a supply opening and an inlet hole overlapped with each other and the overlapping area of the supply opening and inlet hole is a function of the revolution angle.

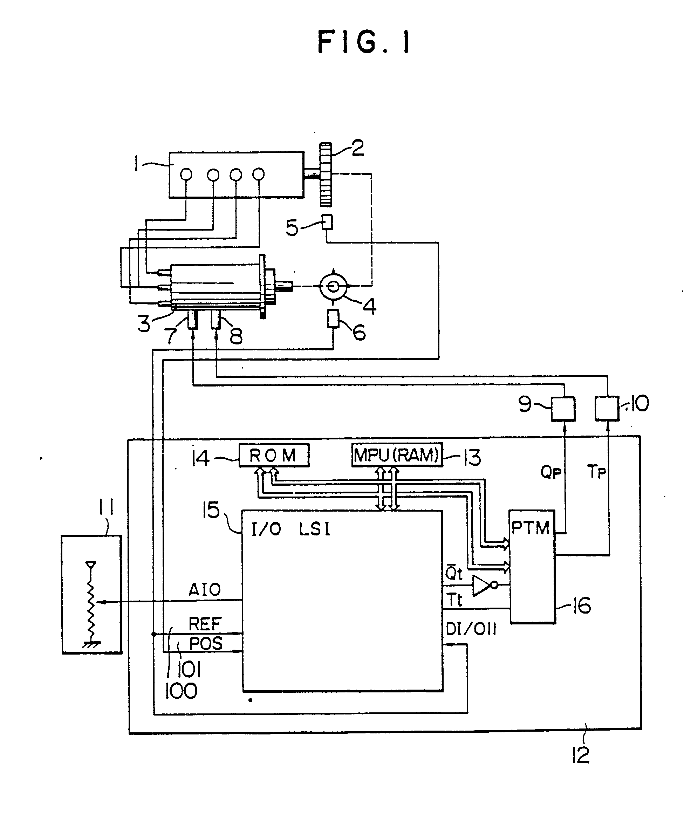

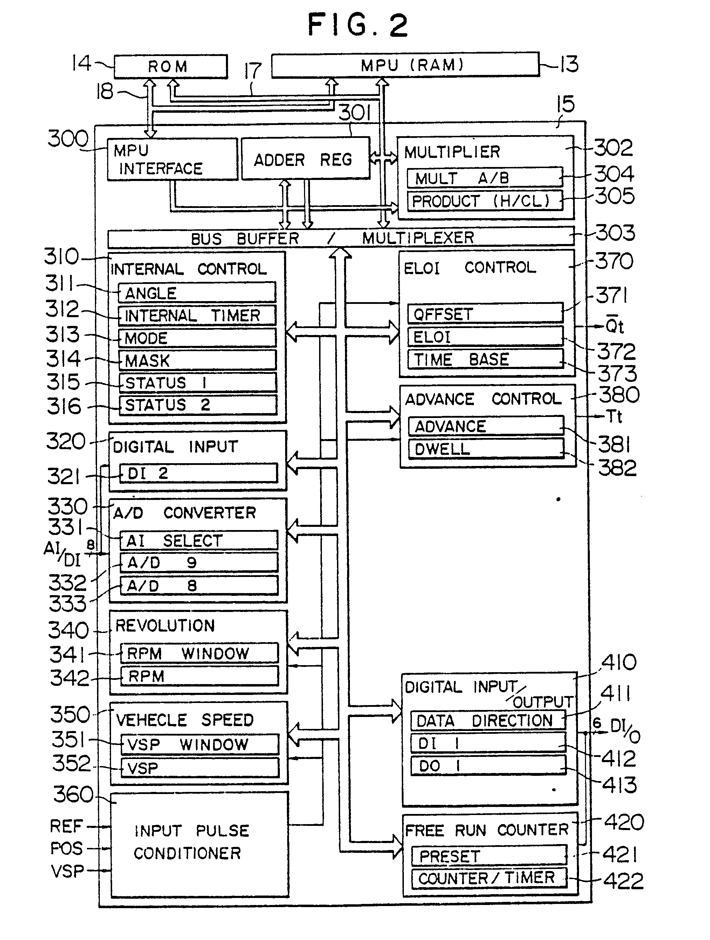

To define the problem which is to be solved by the present invention we refer to Figs. 1 and 2 of the mentioned EP—A—0 063 375. When the rotor 1 rotates, the first radial path 11 (or second radial path 12) moves close to the corresponding fixed path 13 (or fixed path 14). As proceeding of the rotation of the rotor 1, two corresponding holes 11 and 13 (or 12 and 14) have the larger overlap fuel path. When the corresponding two holes are completely coincident with each other, they provide the maximum fuel path into the pressure chamber 4 (or 6). After that the overlap area becomes smaller in rotation. The optimum timing (period) of the electromagnetic valves are obtained about a time point of complete overlap within a given time duration lying symmetrically at left and at right of the time point of complete overlap and being determined by the respective half value of overlap area. During this time duration the maximum overlap path is obtained and the symmetrical opening action of the holes about the time point of complete overlap can be obtained. When the electromagnetic valves are operated in this time duration, stable and wide range of fuel flow and injection timing control can be realized.

Accordingly, it is the object of the present invention to provide a fuel control apparatus for diesel engines which can achieve an optimum electromagnetic valve driving timing.

The above object is solved according to the invention by the features of claim 1.

Claim 2 characterizes an advantageous development thereof.

The present invention will be apparent from the following detailed description taken in conjunction with the accompanying drawing, in which:

Fig. 1 is a block diagram of a fuel injection system of a diesel engine to which the present invention is applied;

Figs. 2 and 3 are detailed block diagrams showing the main part of Fig. 1;

Fig. 4 is a time chart of the control signals;

Figs. 5 and 6 are flowcharts of the control signals; and

Fig. 7 is a characteristic diagram of which is a factor of determination of the valve opening timing.

An embodiment of the present invention will be described hereunder.

Fig. 1 shows the general construction of the system to which the present invention is applied.

In the drawing, in a 4-cylinder diesel engine 1, there are provided a ring gear 2 and a pick up 5 disposed in the vicinity of the ring gear 2 to produce pulses as an engine revolution angle signal POS in accordance with the gear teeth as the ring gear 2 rotates. Further, there are provided a fuel injection pump 3 connected to the 4-cylinder diesel engine 1, a rotor 4 for detecting the revolution of the fuel injection pump 3, and an electromagnetic pickup 6 disposed in opposition to the rotor 4 for producing a fuel injection pump supply opening revolution angle reference signal REF. The fuel injection pump 3 is provided with an electromagnetic valve 7 for determining the quantity of fuel injection and another electromagnetic valve 8 for determining the injection timing. The electromagnetic valves 7 and 8 are arranged to be driven by drive circuits 9 and 10 respectively. Each of the drive circuits 9 and 10 is driven by program timer module (hereinafter referred to as PTM) 16 in a control circuit 12 which may be a microcomputer. The control circuit 12 is constructed by a micro processor (hereinafter referred to as MPU) 13 incorporating a RAM (random access memory), a ROM (read only memory) 14, and an input/output circuit (hereinafter referred to as I/O) 15. The control circuit 12 is arranged to receive a signal from a number of revolutions setter 11 for setting the number of revolutions of the 4-cylinder diesel engine 1.

Fig. 2 shows the detail of the control circuit 12 shown in Fig. 1.

As the respective circuit components, HD6802, HD462732, HD46510, and HD6840 each manufactured by Hitachi, Ltd. and available on the market may be used as the MPU 13, the ROM 14, the I/O 15, and PTM 16 respectively. The MPU 13 operates the input data from the I/O 15 on the basis of the various programs stored in the ROM 14 and produces again the result of operation to the I/O 15 and the PTM 16. The RAM is used for temporarily storing the data during these operations. The data exchange among the MPU 13, the ROM 14, the I/O 15, and the PTM 16 is performed through a data bus 17 and a control bus 18.

The registers provided in the I/O 15 of the functions thereof will be described hereunder.

The control bus 18 from the MPU 13 is connected to an MPU interface 300 which serves as an interface for an interruption signal (hereinafter referred to as IRQ), an address signal, a tip selecting signal, a read/write signal, etc., and which performs register control and selection of an address register 301, a multiplier 302, and a bus buffer/multiplexer 303. Each of the address register 301 and the multiplier 302 can be directly accessed from the MPU 13, while the registers except the registers 304 and 305 shown in Fig. 2 are indirectly accessed from the bus buffer/multiplexer 303. A register address to be accessed is written into the address register 301. The multiplier 302 comprises a multiplicand/multiplier register 304 and a multiplication resultant register 305.

A control circuit 310 within the I/O 15 is constituted by a register for performing angle designation of angle interruption generation (hereinafter referred to as ANGR) 311, a register for performing period designation of timer interruption generation of a predetermined period (hereinafter referred to as INTVR) 312, a register for performing designation of operation of the I/O 15 (hereinafter referred to as MODER) 313, a resistor for masking each interruption request (hereinafter referred to as MASKR) 314, a register for indicating a factor of interruption output (hereinafter referred to as STS1R) 315, and a register for indicating the status of the I/O 15 (hereinafter referred to STS2R) 316.

An angle interruption is generated when the content written in the ANGR 311 coincides with count of angles so that the $2^6$ bit of the STS1R 315 becomes "1". The angular counting is performed at the leading and trailing edges of pulses of the engine revolution angular signal POS and the count is cleared every time when the leading edge of the fuel injection pump stroke reference signal REF is received.

Timer interruption is generated when the content written in the INTVR 312 coincides with count of clock signals of 128 μsec set therein so that the $2^5$ bit of the STS1R 315 becomes "1".

An analog data input circuit 330 has eight analog input terminals (AI/DI), and the selection of terminal is performed on the basis of the data written in an analog input terminal selection register (hereinafter referred to as AISEL) 331. The A/D converted data are held in a 9-bit data register 332 and an 8-bit data register 333. The analog inputs AI/DI are internally connected to a digital input circuit (hereinafter referred to as DI1) 320 and held in a digital input register (hereinafter referred to as DI2) 321 in the form of "1" or "0" of a digital signal of a MOS level.

A number of revolutions measuring circuit 340 comprises a register 341 for designating the measuring time of counting the pulses of the engine revolution angle signal POS, and a register 342 for holding the measured data.

A vehicle speed measuring circuit 350 comprises a register 351 for designating the measuring time of counting the pulses of the vehicle speed signal VSP, and a register 352 for holding the measured data. Reference numeral 360 designates a circuit for forming pulses for performing logical processing for counter reprocessing on the basis of the fuel injection pump supply opening reference angle signal REF, the engine revolution angle signal POS, and the vehicle speed signal VSP.

A circuit 370 for forming a trigger signal $Q_t$ of driving pulse (hereinafter referred to as Q pulse) for the first electromagnetic valve of the fuel injection pump is constituted by a register 371 (hereinafter referred to as QFFSR) for designating the revolution angle from fuel injection pump supply opening reference angle signal REF to the opening operation of the first electromagnetic valve, a register 372 (hereinafter referred to as ELOI) for designating the output pulse width, and a register 373 (hereinafter referred to as TABASE) for designating the time which becomes the resolution of the output pulse. The counting of the revolution angles of the QFFSR 371 is performed at the leading and trailing edges of the engine rotational angle signal POS.

A circuit 380 for forming a trigger signal $T_t$ of initiating output of the second valve driving pulse (hereinafter referred to as T pulse) for determining the injection timing of the fuel injection pump is constituted by a register 382 (hereinafter referred to as DWLR) for designating the revolution angle from fuel injection pump supply opening reference angle signal REF to the initiation of output of the T pulse, and a register 381 (hereinafter referred to as ADVR) for designating the revolution angle of the pulse width of the T pulse output. The counting of the revolution angles is performed at the leading and trailing edges of the engine revolution angle signal POS.

The contents of the respective registers ELOI 372, TBASE 373, and ADVR 381 are initially set to a minimum value.

A digital input/output circuit 410 is constituted by a register 411 (hereinafter referred to as DDR) for determining the direction of input/output, an input data register 412 (hereinafter referred to as DI), and an output register 413 (hereinafter referred to as DOI). There are provided six input/output terminals DI/O and one terminal DI/O$_{11}$ of them operates as an external interruption terminal.

A free run counter circuit 420 is constituted by a counter preset register (hereinafter referred to as PRSR) 421, and a counter timer counter (hereinafter referred to as TIMEC) 422, whereby the contents of the inner timer are held and stored and interruption is generated, at the leading edge of the DI/O$_{11}$ signal on the basis of 16 μsec clock. Further, interruption is generated when overflow occurs in the timer. The reading of the TIMEC 422 is performed by measuring the revolution period of the engine on the basis of the number of overflow interruption and calculation.

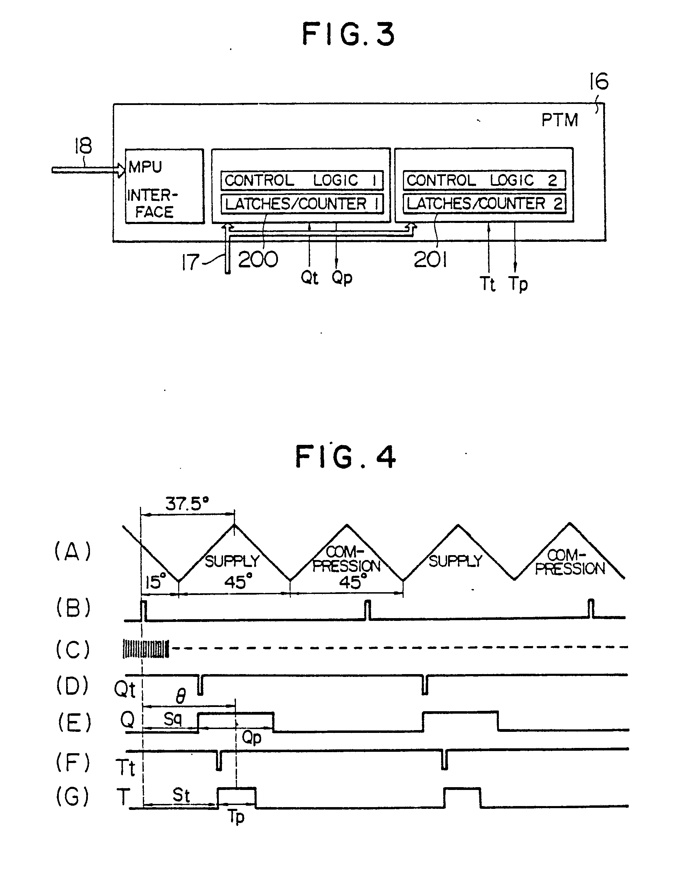

Fig. 3 shows the detail of the PTM 16. That is,

the pulse width $Q_p$ of the Q pulse written in a latch counter 200 from the MPU 13 is produced at the leading edge of the trigger signal $Q_t$. The T pulse is generated also in the same manner. The pulse width data of $Q_p$ and $T_p$ have resolution of 1 μsec clock pulse of an enable signal in the control bus 18 of the MPU 13, thereby determining the Q and T pulses.

Fig. 4 shows the timing chart of various signals. (A) of Fig. 4 shows the timing of the fuel supply and compression by the mechanical structure of the fuel injection pump. The fuel injection in the diesel engine is performed for a certain short time during a period of compression. In fuel supplying, the quantity and timing of fuel injection can be controlled by opening the first and second electromagnetic valves. Accordingly, it is sufficient to properly control the valve opening timing. As seen in (A) of Fig. 4, the triangular shape shows that the cross-sectional area of the fuel flow-into path of the value varies in accordance with the angle of revolution of the fuel injection pump. (B) of Fig. 4 shows a fuel supply opening angle reference signal which is mechanically set to 15° in pump angle before the fuel supply point. This is because there is a delay in time until the fuel flowing out of the electromagnetic valve when the valve is opened, reaches the fuel supply opening of the fuel injection pump, and therefore fuel is supplied from point before the fuel supply opening. (C) of Fig. 4 shows the engine revolution angle signal POS. (D) of Fig. 4 shows the trigger signal $Q_t$ of the Q pulse of the first electromagnetic valve. The signal $Q_t$ is outputted at the angle determined by the data $S_q$ of the register QFFSR 371 of the I/O 15 is determined. (E) of Fig. 4 shows the Q pulse produced on the basis of the data $Q_p$ of the latch 200 of the PTM 16 for determining the valve opening of the first electromagnetic valve. (F) of Fig. 4 shows the trigger signal $T_t$ of the T pulse of the second electromagnetic valve. The signal $T_t$ is outputted at the angle determined by the data $S_t$ of the register ADVR 381 of the LSI 15 of the I/O 15. (G) of Fig. 4 shows the T pulse produced on the basis of the data $T_p$ of the latch 201 of the PTM 16 for determining the valve opening timing of the second electromagnetic valve.

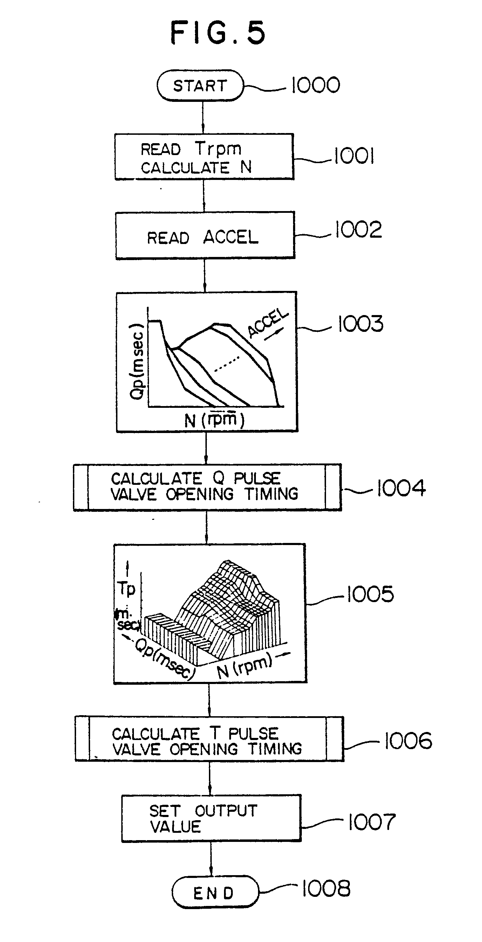

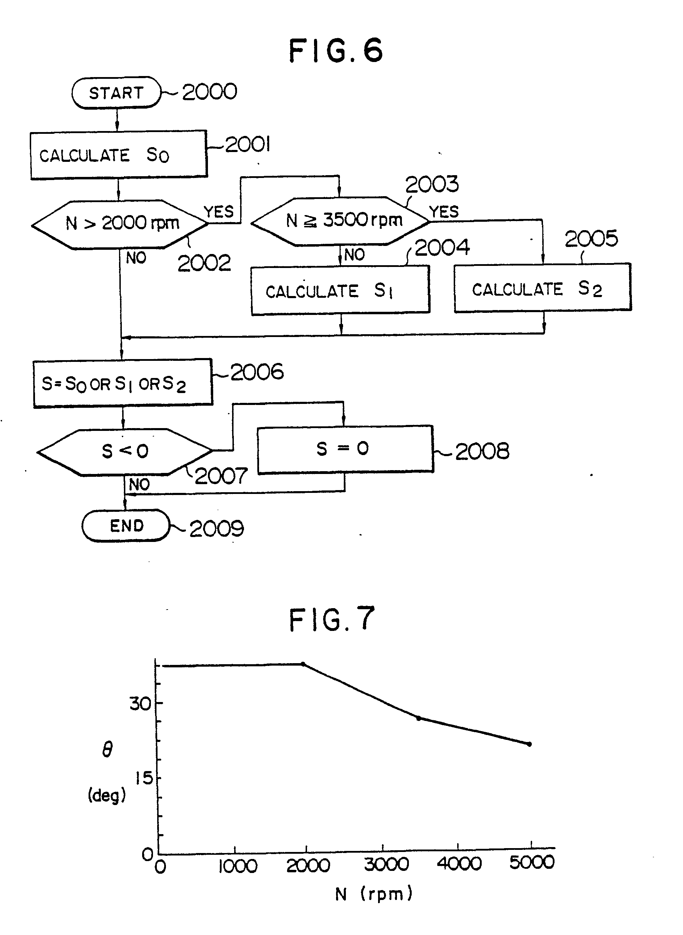

Referring to Figs. 5 and 6, an embodiment of the present invention will be described.

In Fig. 5, an interruption signal is generated at the leading edge of the fuel injection pump supply opening reference angle signal REF and the flow is started in step 1000 in response to this interruption signal. When the flow is started, in a step 1001, the time corresponding to the number of overflow interruption is subtracted by the data read by the TIMEC 422, the difference is doubled, the period is obtained, and the number of engine rotation N is obtained by calculating the reciprocal of the period. Next, in a step 1002, the number of revolution setting data ACCEL is read from the register of the A/D converter circuit 330, and in a step 1003, previously obtained map data of engine characteristic curves are read from the ROM 14 on the basis of the number of engine revolutions and the number of revolutions setting data ACCEL and the valve opening pulse width $Q_p$ of the first electromagnetic valve for the injection quantity control by interpolating calculation. Next, in a step 1004, the predetermined calculation is made to obtain the valve opening timing angular data $S_q$ is obtained on the basis of the number of engine revolutions N and the valve opening pulse width $Q_p$. Then, in a step 1005, the valve opening pulse width $T_p$ for the second electromagnetic valve controlling a fuel injection timing is obtained on the basis of the injection timing map of engine characteristic curves previously obtained on the basis of the number of engine revolutions. After the valve opening pulse width $T_p$ for the second electromagnetic valve is obtained in the step 1005, the predetermined valve opening timing angular data $S_t$ is calculated on the basis of the valve opening pulse width $T_p$ and the number of engine revolution N in a step 1006. In a step 1007, next, the obtained pulse width data $Q_p$ of the Q pulse, and the pulse width data $T_p$ of the T pulse are written into the latch counters 200 and 201, respectively, of the PTM 16, and the valve opening timing angular data $S_q$ of the Q pulse and the valve opening timing angular data $S_t$ of the T pulse are written into the OFFSR 371 and the ADVR 381, respectively, of the I/O 15, ending the flow in a step 1008.

Fig. 6 shows a subroutine of the valve opening timing calculation, and Fig. 7 shows the characteristic of the angle between the angle reference signal and the center of the pulse width, which becomes a factor of valve opening determination.

In this embodiment, as shown in Fig. 7, the center position of the output pulse (hereinafter referred to as P) varies depending on the number of engine revolution. The condition of this characteristic is as follows:

In the case where N<2000 rpm,

$$\theta_0 = 37.5°$$

In the case where 2000 rpm $\leq$ N<3500,

$$\theta_1 = 37.5° - \left\{ \frac{11.25°}{1500} (N-2000) \right\}$$

In the case where 3500 rpm $\leq$ N,

$$\theta_2 = 37.5° - \left\{ \frac{3.75°}{1500} (N-3500) + 11.25° \right\}$$

In these conditions, each of $\theta_0$, $\theta_1$, and $\theta_2$ represents the angles from the angle reference signal to the center position of the P pulse.

In the case where the pulse width of the P pulse comes in front of the angle reference signal REF, however, the above-mentioned conditions are not applied but the P pulse becomes an immediate output simultaneously with the angle reference signal. The resolution of the revolution angle signal used in this embodiment is 0.9091°.

In Fig. 6, when the subroutine is started in a step 2000, in the case where N<2000 rpm and $\theta_0$=37.5°, the valve opening timing $S_0$ (the angular data of the leading edge of pulse from the angle reference signal) is calculated in a step 2001. That is the value of $S_0$ is obtained from the following equation:

$$S_0=\{37.5-P\times N\times 1.5\times 10^{-6}\}\frac{1}{0.9091}$$

Next, in a step 2002, judgement is made as to whether the number of engine revolutions N is larger than 2000 rpm or not, and if not it is considered that $S=S_0$ in a step 2006. If the result of judgement proves that the number of engine revolutions N is larger than 2000 rpm in the step 2002, judgement is made as to whether the number of engine revolution N is equal to or larger than 3500 rpm or not at a step 2003. If the result of judgement proves that the number of engine revolutions N is smaller than 3500 rpm in the step 2003, the valve opening timing $S_1$ for the electromagnetic valve is obtained from the following equation in a step 2004:

$$S_1=S_0-(N-2000)\times 8.25\times 10^{-3}$$

Then, it is considered that $S=S_1$ in the step 2006.

On the contrary, if the result of judgement proves that the number of engine revolutions N is larger than 3500 rpm in the step 2003, the valve opening timing $S_2$ for the electromagnetic valve is obtained from the following equation in a step 2005:

$$S_2=S_0-(N+1000)\times 2.75\times 10^{-3}$$

Then, it is considered that $S=S_2$ in the step 2006.

Next, in a step 2007, judgement is made as to whether the value of S set in the step 2006 is smaller than zero, that is

$$S<0$$

and if the result of judgement proves that the value of S is larger than zero, it is considered that $S=0$ in a step 2008 and the routine is ended.

Thus, according to the present invention, the dynamic delay in fuel supply due to the structure and revolution of the fuel injection pump is previously measured experimentally to set the optimum valve opening timing to thereby make it possible to perform more stably the control of quantity and timing of fuel injection.

## Claims

1. A fuel control apparatus for diesel engines comprising a fuel injection pump (3) of the 2-chamber communicating control system having a first electromagnetic valve (7) for controlling the quantity of fuel injection and a second electromagnetic valve (8) for controlling the timing of fuel injection, and an electronic control device (9, 10, 12) having at least a reference signal (REF) of revolution angle of a fuel supply portion of said fuel injection pump and a signal (POS) representing the number of revolutions of said engine and for driving each of said first and second electromagnetic valves by processing said respective signals, in which said apparatus further comprises means (13, 14, 15, 16) for determining the revolution angle of the leading edge of a drive pulse for driving each of said first and second electromagnetic valves on the basis of said revolution angle reference signal, characterized in that the leading edge of the drive pulse of the fuel quantity obtaining valve is a function of the width of said drive pulse and is determined for each of said first and second electromagnetic valves such that the center of width of said drive pulse has a predetermined angular positional relation with the revolution angle of said fuel supply portion.

2. A fuel control apparatus according to claim 1, in which the center of width of said drive pulse is varied with respect to the revolution angle of said fuel supply portion as a function of said signal representing the number of revolution of said engine.

## Patentansprüche

1. Kraftstoffsteuergerät für Dieselmotoren, umfassend eine Kraftstoffeinspritzpumpe (3) des Zweikammerverbindungs-Steuersystems mit einem ersten Magnetventil (7) zur Regelung der Einspritzmenge und einem zweiten Magnetventil (8) zur Regelung des Einspritzzeitpunkts, und eine elektronische Steuerinheit (9, 10, 12), die wenigstens ein Bezugssignal (REF) des Rotationswinkels eines Kraftstofförderteils der Einspritzpumpe und ein die Motordrehzahl bezeichnendes Signal (POS) hat zur Ansteuerung des ersten und des zweiten Magnetventils durch Aufbereiten der jeweiligen Signale, wobei das Gerät ferner Mittel (13, 14, 15, 16) umfaßt zur Bestimmung des Rotationswinkels aus der Vorderflanke eines Ansteuerimpulses zur Ansteuerung jedes der beiden Magnetventile auf der Basis des Rotationswinkel-Bezugssignals, dadurch gekennzeichnet, daß die Vorderflanke des Ansteuerungsimpulses für das Einspritzmengen-Regelventil eine Funktion der Breite des Ansteuerungsimpulses ist und für jedes der beiden Magnetventile so bestimmt ist, daß das Zentrum der Breite des Ansteuerungsimpulses eine vorbestimmte Winkellage-Beziehung zu dem Rotationswinkel des Kraftstofförderteils hat.

2. Kraftstoffsteuergerät nach Anspruch 1, wobei das Zentrum der Breite des Ansteuerungsimpulses in bezug auf den Rotationswinkel des Kraftstofförderteils als Funktion des die Motordrehzahl bezeichnenden Signals änderbar ist.

## Revendications

1. Appareil de commande de carburant pour moteurs diesel comprenant une pompe à injection de carburant (3) du système de commande de 2 chambres communicantes comportant une première soupape électromagnétique (7) servant à commander la quantité d'injection de carburant et une seconde soupape électromagnétique (8) servant à commander la synchronisation de l'injection de carburant, et un dispositif de commande électronique (9, 10, 12) comportant au moins un signal de référence (REF) de l'angle de rotation d'une partie de l'amenée de carburant de ladite pompe à injection de carburant et un signal (POS) représentant le nombre de tours dudit moteur et servant à commander chacune desdites première et seconde soupapes électromagnétiques par le traitement desdits signaux respectifs, dans lequel ledit appareil comprend en outre des moyens (13, 14, 15, 16) servant à déterminer l'angle de rotation du front montant d'une impulsion de commande destinée à commander chacune desdites première et seconde soupapes électromagnétiques sur la base dudit signal de référence d'angle de rotation, caractérisé en ce que le front montant de l'impulsion de commande de la soupape servant à obtenir la quantité de carburant est une fonction de la largeur de ladite impulsion de commande et est déterminé pour chacune desdites première et seconde soupapes électromagnétiques, tel que le milieu de la largeur de ladite impulsion de commande se trouve dans un rapport de position angulaire prédéterminé avec l'angle de rotation de ladite partie d'amenée de carburant.

2. Appareil de commande de carburant selon la revendication 1, dans lequel le milieu de la largeur de ladite impulsion de commande varie en fonction de l'angle de rotation de ladite partie d'amenée de carburant en tant que fonction dudit signal représentant le nombre de tours dudit moteur.

# FIG. 1

# FIG. 2

# FIG. 3

# FIG. 4

# FIG. 5

```
           ( START )——1000
               │
               ▼
      ┌──────────────────┐
      │   READ Trpm      │——1001
      │   CALCULATE N    │
      └──────────────────┘
               │
               ▼
      ┌──────────────────┐
      │   READ ACCEL     │——1002
      └──────────────────┘
               │
               ▼
      ┌──────────────────┐
      │  [graph Qp(msec) │——1003
      │   vs N(rpm),     │
      │   ACCEL]         │
      └──────────────────┘
               │
               ▼
      ┌──────────────────┐
      │ CALCULATE Q PULSE│——1004
      │ VALVE OPENING    │
      │ TIMING           │
      └──────────────────┘
               │
               ▼
      ┌──────────────────┐
      │  [3D graph Tp    │——1005
      │  (msec), Qp(msec)│
      │   vs N(rpm)]     │
      └──────────────────┘
               │
               ▼
      ┌──────────────────┐
      │ CALCULATE T PULSE│——1006
      │ VALVE OPENING    │
      │ TIMING           │
      └──────────────────┘
               │
               ▼
      ┌──────────────────┐
      │   SET OUTPUT     │——1007
      │   VALUE          │
      └──────────────────┘
               │
               ▼
           ( END )——1008
```

4

# FIG. 6

```
        ( START )~2000
            │
   ┌─────────────────────┐
   │   CALCULATE  S₀      │~2001
   └─────────────────────┘
            │
      ╱──────────────╲  YES      ╱──────────────╲ YES
     ╱  N > 2000 rpm   ╲──────── ╱  N ≥ 3500 rpm  ╲──────────┐
      ╲──────────────╱          ╲──────────────╱ 2003        │
            │ NO    2002              │ NO   2004        2005 │
            │                  ┌──────────────┐    ┌──────────────┐
            │                  │ CALCULATE S₁ │    │ CALCULATE S₂ │
            │                  └──────────────┘    └──────────────┘
            │                         │                   │
   ┌─────────────────────┐
   │ S = S₀ OR S₁ OR S₂  │~2006
   └─────────────────────┘
            │
      ╱──────────────╲        ┌──────────────┐
     ╱     S < 0       ╲───── │    S = 0     │~2008
      ╲──────────────╱        └──────────────┘
            │ NO   2007
        ( END )~2009
```

# FIG. 7

$\theta$ (deg) vs N (rpm)